Europäisches Patentamt

European Patent Office

Office européen des brevets

(11) Numéro de publication : **0 403 381 B1**

(12) **FASCICULE DE BREVET EUROPEEN**

(45) Date de publication du fascicule du brevet :
**19.08.92 Bulletin 92/34**

(21) Numéro de dépôt : **90401644.1**

(22) Date de dépôt : **13.06.90**

(51) Int. Cl.⁵ : **B01J 8/24,** B01J 38/32,
C10G 11/18, // F23C11/02

(54) **Procédé et dispositif de régulation ou controle du niveau thermique d'un solide pulverulent, comportant un échangeur de chaleur à compartiments en lit fluidisé ou mobile.**

(30) Priorité : **16.06.89 FR 8908159**

(43) Date de publication de la demande :
**19.12.90 Bulletin 90/51**

(45) Mention de la délivrance du brevet :
**19.08.92 Bulletin 92/34**

(84) Etats contractants désignés :
**BE DE ES GB IT NL**

(56) Documents cités :
**EP-A- 0 236 609**
**EP-A- 0 332 536**
**FR-A- 2 343 980**
**US-A- 4 690 802**

(73) Titulaire : **INSTITUT FRANCAIS DU PETROLE**
**1 et 4 Avenue de Bois-Préau BP 311**
**F-92506 Rueil Malmaison Cédex (FR)**

(72) Inventeur : **Pontier, Renaud**
**Le Village, Luzinay**
**F-38200 Vienne (FR)**
Inventeur : **Hoffmann, Frédéric**
**68 Quai de Jemmapes**
**F-75010 Paris (FR)**

## Description

L'invention concerne un procédé de régulation thermique et/ou de débit d'un solide pulvérulent avec échange thermique en lit fluidisé et un dispositif pour la mise en oeuvre de ce procédé. Plus particulièrement, le procédé peut s'appliquer à la régénération de catalyseurs particulièrement chargés en résidus hydrocarbonés et en coke après réaction avec une charge d'hydrocarbures. Elle peut concerner les catalyseurs d'hydrotraitement, d'hydrocraquage ou de craquage catalytique, de réformage ou même toutes masses de contact utilisées par exemple dans les procédés de craquage thermique. L'invention peut également concerner (a) toute réaction de raffinage en présence d'un catalyseur fluidisé ou mobile ou (b) la combustion de charbon.

A titre d'exemple purement illustratif, on utilisera le procédé et le dispositif soit à la combustion du charbon soit aux réactions de raffinage en lit fluide de catalyseur soit à la régénération de catalyseur usagé issu d'un procédé par exemple de réformage catalytique ou craquage catalytique, en lit fluidisé, de charges lourdes ayant un carbone Conradson élevé, telles qu'un résidu atmosphérique, un résidu sous vide, un résidu désasphalté, ces résidus pouvant être hydrotraités. D'autres applications sont les suivantes : opération de séchage de solides pulévérulents, dans des gammes de températures imposées ou spécifiques, gazéification nécessitant également des conditions impératives de températures, procédés chimiques divers exothermiques ou endothermiques : fabrication d'acide phosphorique et/ou de phosphates, oxydation de l'éthylène, préparation de chlorures d'alkyle, préparation de l'anhydride phtalique, de l'acrilonitrile, synthèse de Fisher et Tropsch on citera également le vapocraquage, les foyers à lits fluidisés, les combustions diverses, la gazéification du charbon, les échangeurs de récupérateur de chaleur ; les mélangeurs de particules différentes, les traitements thermiques de pièces métalliques, l'incinération des boues des stations d'épuration, les diverses opérations de séchage, les "clinkérisations et/ou calcinations dans l'industrie du ciment, le grillage du sulfure de zinc dans la fabrication du zinc, etc...

Une utilisation particulière donnée ici à titre d'exemple est la régénération de catalyseurs de craquage catalytique.

En particulier, lorsqu'on procède au craquage de charges composées d'hydrocarbures à haut point d'ébullition, par exemple à un point d'ébullition supérieur à 550°C, ou de charges ayant un carbone Conradson élevé ou une concentration en métaux importante, du coke et des hydrocarbures lourds peuvent se déposer sur le catalyseur en quantité plus importante et sa régénération par une combustion peut provoquer un dégagement de chaleur qui peut détériorer l'appareillage et désactiver le catalyseur.

En ce qui concerne les régénérations de catalyseurs (de craquage par exemple), pour pallier ces inconvénients, il a été proposé selon le brevet US-A-4035 284 de réaliser une régénération en deux zones où la combustion fonctionne en tout ou partie à co-courant de catalyseur et de fluide oxydant de façon à minimiser le temps de séjour du catalyseur à haute température, sans toutefois dépasser 750°C, pour ne pas diminuer l'activité du catalyseur. Dans ce brevet est décrit le recyclage d'une partie de catalyseur régénéré chaud au catalyseur usagé dans la partie inférieure du régénérateur pour initier la combustion des dépôts hydrocarbonés sur le catalyseur et la conversion du monoxyde de carbone. La température de régénération est néanmoins limitée à 750°C en raison de la présence de vapeur d'eau, résultant de la combustion du coke et de l'hydrogène des hydrocarbures, pouvant nuire à la stabilité du catalyseur, et en raison des limites métallurgiques propres à l'acier inox généralement utilisé.

Dans un autre brevet EP-A-101765, il est introduit dans une zone inférieure d'un régénérateur un mélange de catalyseur régénéré chaud en provenance d'une seconde zone supérieure et de catalyseur régénéré froid pour contrôler la température de combustion du catalyseur dans le régénérateur. Pour refroidir le catalyseur régénéré, on l'introduit dans un échangeur thermique. Ce catalyseur chaud circule notamment de bas en haut sous la forme d'un lit fluidisé dense dans l'échangeur.

Comme il est nécessaire par ailleurs, pour amener ce catalyseur régénéré et refroidi dans la zone de combustion du régénérateur, de le mélanger avec du catalyseur régénéré chaud, du catalyseur usagé et de l'air de fluidisation dans une conduite de mélange en aval de l'échangeur et en amont de la zone de combustion, l'obligation de fluidisation à la sortie de l'échangeur complique énormément l'écoulement des différentes phases. Il en résulte notamment une perturbation en sortie de l'échangeur de sorte que la surface d'échange n'est pas utilisée à son maximum et le contrôle du niveau de solides dans l'échangeur devient aléatoire.

Par ailleurs, le risque d'érosion est augmenté. Enfin, comme l'introduction du catalyseur régénéré chaud, celle du catalyseur froid et celle du catalyseur usagé sont effectuées à la partie la plus basse du régénérateur dans une phase dense, il est nécessaire de fluidiser les grains de ces catalyseurs contenus dans le régénérateur pour procéder à la combustion en phase diluée et l'envoyer ensuite dans la seconde zone du régénérateur.

De plus, l'art antérieur est illustré par les brevets suivants :

EP-A-0.236.609 décrit un procédé où l'on refroidit un catalyseur régénéré dans un échangeur thermique après l'avoir prélevé par une conduite d'entrée dans une zone de désengagement d'un régénérateur et on le réintroduit dans une zone de combustion inférieure à la zone de désengagement par une conduite de sortie différente de la conduite d'entrée dans l'échangeur. Par ailleurs, l'échangeur contient un unique compartiment où le débit de catalyseur est régulé.

**FR 2.343.980** décrit un réacteur thermique dans lequel une réaction chimique sans catalyseur se produit. Il comprend au moins une cloison délimitant au moins deux compartiments, au moins une entrée de matière à traiter sur la périphérie du réacteur, une évacuation de matière traitée depuis la base du compartiment central et une sortie de gaz du réacteur thermique. La cloison ci-dessus et des moyens de dérivation au-dessus des compartiments permettent de définir une circulation du courant de matière sous la forme d'une cascade sensiblement horizontale allant du compartiment interne vers le compartiment périphérique, cette circulation s'établissant autour de la cloison et permettant la réalisation de la réaction chimique dans de meilleures conditions. Ce brevet ne décrit pas par conséquent un procédé de régulation thermique d'un catalyseur et sa réintroduction dans une zone de réaction.

L'art antérieur est le mieux illustré par les brevets US-A-4438 071-US-A-4483 276 ou US-A-4439 533 où il est suggéré de contrôler la température de régénération par dérivation d'une partie du catalyseur dans un échangeur de chaleur, placé à la base d'une zone de désengagement située à la partie supérieure du régénérateur et comportant un faisceau d'échange permettant de refroidir ladite partie de catalyseur au niveau de tempé-rature requis. Dans cet échangeur, la circulation du catalyseur ne suit aucun trajet déterminé ; le flux d'échange de catalyseur entre l'échan-geur et la régénération s'établit en fonction uniquement des degrés de fluidisation de ces deux récipients et des niveaux de pression dans la zone de désengagement. De ce fait la circulation de catalyseur peut être qualifiée d'erratique en ce sens qu'elle s'établit tantôt préférentiellement du régénérateur vers l'échangeur, et tantôt préférentiellement en sens inverse.

De plus le débit global de catalyseur s'établissant entre l'échangeur et le régénérateur n'est pas contrôlable, ce qui signifie pratiquement que ce type d'échangeur ne possède qu'un seul niveau de fonctionnement, en d'autres termes une souplesse extrêmement réduite.

L'art antérieur est également illustré par le brevet US-A-2 492 948 et US-A-4 690 802. On fait entrer selon le premier brevet dans un échangeur de chaleur dont l'entrée est à l'intérieur d'un lit dense d'un régénérateur, une partie du catalyseur usagé et on le fait sortir à un niveau plus élevé au sein du même lit dense, la remontée du catalyseur refroidi étant effectuée par la force d'ascension d'un gaz de fluidisation situé à la base de l'échangeur. Cette force d'ascension implique, comme il est dit dans le brevet US-A-4 438 071, des vitesses de gaz très élevées (plusieurs mètres par seconde) qui perturbent la zone dense du régénérateur et rendent difficile l'entrée du catalyseur dans l'échangeur de chaleur. Il s'ensuit un échange de chaleur limité. L'objet de l'invention permet de remédier aux inconvénients mentionnés ci-dessus.

La présente invention offre, dans l'utilisation particulière ci-dessus un procédé simple pour contrôler la température du catalyseur dans une zone de régénération et pour maintenir le niveau thermique, par exemple dans l'unité de craquage catalytique, à un seuil acceptable, même dans le cas où la charge hydrocarbonée contient des quantités importantes de carbone.

D'une manière plus générale, l'invention permet la régulation thermique ou encore une régularisation thermique et/ou permet de régulariser ou réguler des débits de lits fluidisés et/ou des lits mobiles.

Il s'avère possible, d'une façon particulière d'évacuer les calories excédentaires ou d'apporter les calories déficitaires et d'assurer la régularisation thermique des lits fluidisés (ou mobiles) conforme à l'invention dans au moins une zone ou enceinte de traitement, on introduit un solide pulvérulent, on effectue un traitement du solide dans une zone à lit fluidisé dense ou mobile, on soutire du lit fluidisé dense ou mobile une partie au moins du solide par un organe de liaison, on envoie cette partie de solide dans une zone de régulation ou contrôle de niveau thermique avantageusement allongée, on procède à une régulation ou contrôle de niveau thermique par échange de chaleur indirect avec un fluide et on réintroduit cette partie du solide ainsi régulé thermiquement dans le lit fluidisé dense ou mobile de la zone de traitement par le même organe de liaison. De manière plus précise, on fait circuler en lit fluidisé dense ou mobile ladite partie du solide dans la zone de régulation comportant une cloison interne de séparation qui définit deux compartiments adjacents, allongés selon leur axe de symétrie et communiquant par leur partie inférieure, le solide s'écoulant, de préférence de manière descendante, à l'état fluidisé ou mobile dans l'un des compartiments, la vitesse de fluidisation dans ce compartiment étant avantageusement comprise entre 0,1 cm et 2m/s et le catalyseur remontant à l'état fluidisé dans l'autre compartiment, la vitesse de fluidisation dans l'autre compartiment étant avantageusement comprise entre 0,1 et 6 m/s.

De préférence, la vitesse de fluidisation dans le compartiment ascendant est supérieure à la vitesse dans le compartiment descendant.

La suite de la description s'applique à titre d'exemple à la régénération d'un catalyseur de craquage catalytique. La circulation organisée d'un compartiment à l'autre, avec passage dans la partie inférieure de la zone de régulation, ici un refroidissement, permet un contrôle du débit de catalyseur refroidi entre la zone de traitement (ici de régénération) et la zone de refroidissement (ou échangeur de chaleur) par un ajustement adéquat des vitesses de fluidisation dans chaque compartiment de la zone de refroidissement. De façon préférée, la vitesse de fluidisation dans le compartiment dans lequel descend le catalyseur est comprise entre 0, 1 cm et 1 m/s et celle dans l'autre compartiment dans lequel le catalyseur remonte refroidi pour aboutir à la base du lit fluidisé dense du régénérateur, est entre 0,3 et 5 m/s. On a observé dans ces conditions une entrée facilitée du catalyseur dans l'échangeur thermique, l'absence substantielle de perturbation dans le lit dense du régénérateur et un excellent niveau d'échange thermique.

Selon une caractéristique du procédé, la zone de refroidissement comporte une cloison interne de séparation entre les deux compartiments allongés et adjacents qui communiquent par leur partie inférieure. Cette cloison peut être une surface plane qui peut s'appuyer sensiblement selon l'axe de l'échangeur sur la paroi généralement cylindrique de l'échangeur thermique, par exemple suivant une de ses génératrices, ou une enveloppe coaxiale au dit axe. De manière préférée, cette cloison peut avoir une section circulaire ou rectangulaire selon un plan perpendiculaire à l'axe de l'échangeur, sensiblement coaxiale au cylindre de l'échangeur et de hauteur inférieure à celle de l'échangeur de façon à permettre la communication des compartiments concentriques ainsi définis.

Avantageusement, le compartiment où on effectue la remontée du catalyseur vers le régénérateur comporte des moyens d'échange de chaleur décrits ci-dessous. Dans le cas de compartiments coaxiaux c'est de préférence le compartiment central qui contient les moyens d'échange de chaleur et par lequel on effectue la remontée du catalyseur. L'échange thermique est alors meilleur car la vitesse du catalyseur assurée par le gaz de fluidisation, habituellement de l'air, est plus importante.

Pour éviter tout problème d'érosion, la distance R selon l'axe de l'échangeur de chaleur entre la partie inférieure de la cloison et des organes d'injection d'un gaz de fluidisation dans chacun des compartiments est généralement comprise entre 0 et 0,8 m et avantageusement comprise entre 0,4 et 0,6 m. De préférence, ces organes d'injection sont disposés à l'intérieur des compartiments.

La partie supérieure de la cloison ne dépasse pas, en règle générale le niveau supérieur de l'échangeur de sorte qu'elle ne déborde sensiblement pas dans le lit dense du régénérateur.

La régénération du catalyseur usagé peut être effectuée dans deux zones de régénération distinctes et séparées. Selon un premier mode de réalisation, on effectue une première régénération du catalyseur en provenance d'une zone réactionnelle dans une première zone de régénération, on refroidit le catalyseur au moins en partie régénéré selon le procédé décrit ci-dessus, et on envoie le catalyseur refroidi de la première zone dans une seconde zone de régénération où l'on effectue une seconde régénération. Le catalyseur régénéré et séparé des effluents de combustion est en général recyclé de la seconde zone de régénération vers la zone réactionnelle.

Selon un second mode de réalisation, on effectue une première regénération du catalyseur en provenance de la zone réactionnelle dans une première zone de régénération, on envoie le catalyseur au moins en partie régénéré vers une seconde zone de régénération, on effectue une seconde régénération, on refroidit le catalyseur selon le procédé ci-dessus et on recycle le catalyseur régénéré et séparé des effluents de combustion de la seconde zone de régénération vers la zone réactionnelle.

Les effluents de première régénération peuvent soit être séparés dans la première zone de régénération soit envoyés avec le catalyseur vers la seconde zone de régénération où il sont ensuite séparés.

Tous ces moyens combinés entre eux coopèrent à l'obtention d'un meilleur échange thermique par rapport à l'art antérieur dans un dispositif à coût réduit et à utilisation simplifiée.

L'échangeur de chaleur peut être d'un type connu en soi. Il peut comprendre une calandre d'orientation verticale dans laquelle le catalyseur peut par exemple circuler à travers l'extérieur des tubes de refroidissement, le fluide de refroidissement, en général de l'eau, circulant à l'intérieur des tubes.

Selon un autre mode de réalisation, l'échangeur de chaleur peut comprendre une pluralité de tubes de forme sinueuse disposés selon son axe de symétrie. Par forme sinueuse, on entend une forme sinusoïdale, crénelée, en zig zag, en accordéon, etc.

Selon un autre mode de réalisation, l'échangeur peut être d'un autre type : la cloison délimitant les compartiments de l'échangeur peut représenter une partie de la surface d'échange. Cette surface est réalisée sous forme de tubes-membranes : une pluralité de tubes où circule le fluide de refroidissement, et s'étendant selon l'axe longitudinal de l'échangeur, est reliée par des ailettes soudées longitudinalement de manière à former une surface continue étanche à la pression. La surface d'échange n'étant en général pas suffisante pour assurer l'intégralité de l'échange de chaleur requis, l'intérieur du compartiment où s'effectue le refroidissement du catalyseur peut être rempli d'une pluralité de tubes d'échange disposés comme indiqué ci-haut. Cette solution présente l'avantage d'augmenter la surface d'échange pour un volume de l'échangeur thermique donné, notamment lorsque la cloison entoure les moyens d'échange de chaleur.

L'invention concerne aussi un dispositif pour le traitement et la régulation thermique d'un solide pulvérulent (par exemple pour la régénération en lit fluidisé et en continu d'un catalyseur usagé).

Il comprend en combinaison :

a) une unité de traitement (par exemple de régénération) (1) sensiblement verticale dont la partie inférieure comporte un lit (3) fluidisé dense ou mobile dudit solide pulvérulent,

b) un échangeur de chaleur (6) de forme allongée, de préférence cylindrique et disposé avantageusement de manière sensiblement verticale, ayant un axe de symétrie et pouvant avoir éventuellement à sa partie supérieure une entrée et une sortie de solide qui communiquent avec ledit lit dense ou mobile,

c) des moyens d'échange de chaleur (25) contenus dans ledit échangeur de chaleur, reliés à des conduites d'entrée (26) et de sortie (27) d'un fluide de régulation thermique. Le dispositif est caractérisé en ce que l'échangeur comprend en combinaison :

– une cloison interne de séparation (22) définissant deux compartiments adjacents allongés (23, 24) suivant ledit axe de symétrie, un premier compartiment ayant une extrémité supérieure reliée à ladite entrée de solide dans le compartiment et éventuellement une extrémité inférieure par laquelle sort le solide, un second compartiment ayant une extrémité inférieure par laquelle éventuellement entre le solide en provenance du premier compartiment, et une extrémité supérieure reliée à ladite sortie éventuelle de solide,

– un espace de passage (30) adapté au passage du solide du premier compartiment au second compartiment,

– des premiers moyens d'injection (28) d'un gaz de fluidisation dans le premier compartiment, disposés au voisinage de l'extrémité inférieure du premier compartiment et adaptés à faire éventuellement s'écouler le solide de manière descendante à l'état fluidisé ou éventuellement mobile, et,

– des seconds moyens d'injection (31) d'un gaz de fluidisation dans le second compartiment, disposés au voisinage de l'extrémité inférieure du second compartiment et adaptés à faire s'écouler le solide de manière ascendante à l'état fluidisé ou mobile. Cette injection peut être purement verticale ou provoquer un courant ascendant hélicoïdal selon un pas et une vitesse désirés.

– et éventuellement un diffuseur généralement dans la partie inférieure de l'échangeur d'un fluide généralement gazeux pour assurer la fluidisation du solide.

Selon une autre caractéristique du dispositif, ce dernier peut comporter des moyens de contrôle de débit du gaz de fluidisation reliés aux dits moyens d'injection de ce gaz et asservis par des moyens d'asservissement à un moyen de mesure de la température dans l'unité traitement (par exemple de régénération). Lorsque le dispositif comporte deux unités de traitement (par exemple de régénération), le moyen de mesure de la température peut se trouver soit dans la première unité, soit dans la seconde.

Selon une autre caractéristique du dispositif selon l'invention, le dispositif peut comprendre un organe de liaison entre l'unité de régénération et l'échangeur de chaleur, avec un axe de symétrie P orienté selon un angle A par rapport à l'axe de symétrie de l'échangeur compris en général entre 0 et 80°, avantageusement entre 40 et 50° et de diamètre Q compris entre 0,8 et 1,5 fois, de préférence entre 0,9 et 1,2 fois le diamètre D de l'échangeur (enveloppe externe). Il peut comprendre au moins un organe d'aération par un gaz tel que de l'air disposé sensiblement au voisinage de l'axe P de l'organe de liaison et adapté à réaliser une vitesse de jet rapportée à la section de l'organe d'aération comprise entre 50 et 150 m/s et de préférence entre 80 et 120 m/s.

Selon un autre mode de mise en oeuvre du procédé, l'organe de liaison peut comporter une cloison interne qui définit deux chambres dont l'une communique avec le premier compartiment de l'échangeur et dont l'autre communique avec le second compartiment. Il comporte en outre au moins un organe d'aération disposé sensiblement selon l'axe P de l'organe de liaison et de préférence au voisinage de l'axe P, dans la chambre communiquant avec le compartiment où s'effectue la remontée du solide.

Les figures ci-dessous illustrent de façon schématique la mise en oeuvre d'un procédé de régénération utilisé dans le cadre d'une unité de craquage catalytique en lit fluidisé avec double régénération du catalyseur, la deuxième unité de régénération se trouvant au dessus de la première selon un même axe vertical. Parmi celles-ci,

– la figure 1 montre un dispositif où le catalyseur régénéré dans un premier régénérateur circule vers un échangeur thermique avant d'être régénéré dans un second régénérateur,

– la figure 2 schématise l'échangeur thermique en coupe longitudinale avec un organe de liaison communiquant avec le premier régénérateur et un faisceau d'échange préféré,

– la figure 3 montre l'échangeur thermique en coupe longitudinale comprenant l'organe de liaison qui comporte une cloison définissant deux chambres coaxiales, et

– la figure 4 représente une coupe longitudinale de l'échangeur thermique montrant un faisceau de tubes.

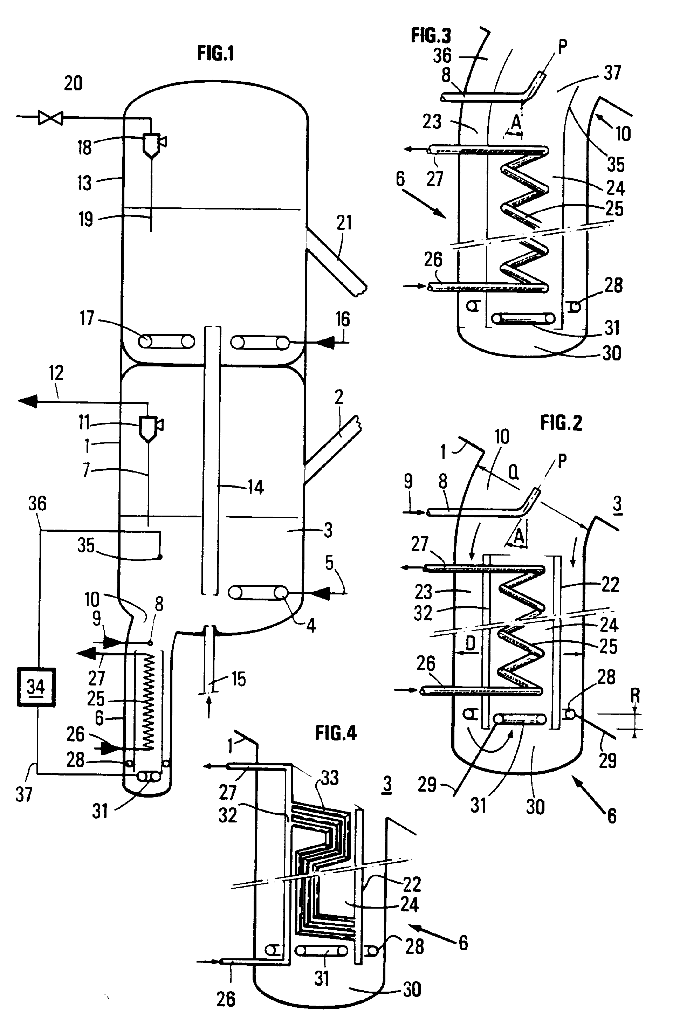

Le dispositif de la figure 1 comprend essentiellement un premier régénérateur 1 de catalyseur usagé tel qu'une zéolithe, en provenance d'une unité de séparation d'un craqueur catalytique en lit fluidisé non représenté sur la figure. Ce catalyseur usagé chargé de coke arrive par une ligne 2 dans le lit fluidisé dense 3 d'un premier régénérateur. Ce lit est réalisé par un anneau ou couronne de fluidisation 4 d'un gaz, de l'air par exemple, amené par une ligne 5.

Selon la figure 1, le catalyseur au moins en partie régénéré de préférence à contre-courant par l'air ci-dessus tombe par gravité vers un échangeur thermique 6 dont l'entrée et la sortie sont connectées à la base du premier régénérateur 1 par l'intermédiaire d'un organe de liaison 10 assurant le passage du catalyseur avant et après refroidissement. Des moyens d'aération 8 par de l'air amené par une ligne 9 aèrent le catalyseur dans l'organe de liaison 10.

Une fois refroidi selon le procédé de l'invention décrit ci-dessus, le catalyseur circule dans la direction opposée où il avait circulé antérieurement et il remonte dans le lit fluidisé dense du premier régénérateur par le même organe de liaison 10. Les particules du catalyseur sont entraînées par le gaz de combustion et séparées par des cyclones 11 internes, disposés avantageusement dans la partie supérieure de la première unité de régénération. Le gaz de combustion riche en hydrogène sulfuré, oxyde de carbone et eau est évacué par une ligne 12 sous pression pour un traitement ultérieur, tandis que les particules de catalyseur retombent par la jambe 7 vers la base du premier régénérateur 1. Elles sont ensuite transférées à la seconde unité de régénération par le conduit 14 alimenté en air par la ligne 15.

La base de la seconde unité de régénération est également alimentée en air par la ligne 16 et les injecteurs 17. La combustion du coke restant s'effectue à contre-courant de l'air injecté.

Les gaz de combustion évacués à la partie supérieure du second régénérateur 13 sont traités dans un cyclone intérieur ou extérieur 18, à la base duquel les particules du catalyseur sont retournées par le conduit 19 au second régénérateur 13, tandis que les gaz de combustion sont évacués par la ligne 20 où une vanne de sécurité est prévue.

Les particules catalytiques régénérées et à la température optimale souhaitée sont recyclées à débit contrôlé par un conduit de recyclage 21 à l'alimentation de l'élévateur de l'unité de craquage (non représenté sur la figure).

Bien qu'on puisse entraîner de la chaleur à n'importe quel point de l'unité de craquage, il est avantageux de l'entraîner au niveau de l'un des régénérateurs et il est préférable, notamment pour des raisons pratiques, de disposer l'échangeur thermique 6 au niveau du premier régénérateur 1.

Une partie au moins du catalyseur, au moins en partie régénéré, est soutirée du lit dense 3 et descend selon la figure 2 dans l'échangeur thermique. Celui-ci, de forme allongée, par exemple cylindrique comprend une cloison interne de séparation 22 formant un cylindre sensiblement co-axial à l'échangeur qui le contient. Cette cloison délimite deux compartiments allongés, adjacents 23 et 24, dont l'un d'eux est de forme annulaire et l'autre, central, de forme cylindrique, ces deux compartiments ont donc une paroi commune, la cloison ci-dessus.

La surface du compartiment central définie par un plan sensiblement perpendiculaire à l'axe de l'échangeur et de forme avantageusement circulaire est en général comprise entre 0,2 et 0,7 fois la surface circulaire de l'échangeur correspondant à son enveloppe externe et définie par le même plan.

Ce compartiment central contient des moyens d'échange de chaleur 25, de forme appropriée entourés par la cloison 22 ; leur partie inférieure est alimentée par exemple par de l'eau de refroidissement ou tout autre fluide, huile etc... amenée par une ligne 26 et la partie supérieure ou sortie de ces moyens 25 évacue un mélange biphasique d'eau et de vapeur correspondant à l'échange par une ligne 27.

Les deux compartiments communiquent entre eux par leur partie inférieure : la cloison de séparation détermine en effet un espace de passage 30 pour le catalyseur puisque cette cloison n'atteint pas l'extrémité basse de l'échangeur. La position de la cloison est déterminée par la distance R de son extrémité inférieure à des moyens de fluidisation ou d'injection 28 et 31 d'un gaz tel que de l'air, amené par une ligne 29, et disposés au voisinage de la partie inférieure des compartiments et de préférence à l'intérieur de chacun des compartiments. Cette distance est avantageusement comprise entre 0,4 et 0,6 mètre.

Le catalyseur circule du haut vers le bas dans le compartiment périphérique, en lit fluidisé. Il est animé par des premiers moyens de fluidisation 28 (un anneau ou une grille) qui sont adaptés à délivrer dans ce compartiment périphérique une vitesse de fluidisation comprise par exemple entre 1 cm/s et 10 cm/s. Il traverse ensuite l'espace de passage 30 à la base de l'échangeur et remonte dans le compartiment central en lit fluidisé. Des seconds moyens de fluidisation 31 (anneau ou grille) sont en effet adaptés à délivrer, dans le compartiment central de volume généralement plus important une vitesse de fluidisation par exemple comprise entre 0,1 m/s et 1 m/s. La pression de fluidisation est en général supérieure dans la partie ascendante à celle de la partie descendante et on peut ajuster le débit thermique en jouant sur un différentiel de pression entre les deux compartiments.

La cloison interne de séparation entourant les moyens d'échange peut être constituée par une pluralité de tubes membranes 32 formant l'enveloppe du compartiment central et à travers lesquels circule le fluide de refroidissement. Ces tubes s'étendent de manière sensiblement parallèle à l'axe longitudinal de l'échangeur et sont reliés par des ailettes soudées longitudinalement de manière à constituer ladite enveloppe.

Les moyens d'échange de chaleur 25 à l'intérieur du compartiment central peuvent être un faisceau de tubes 33 répartis régulièrement autour de l'axe de l'échangeur. De manière préférée, comme le montre la figure 4, le faisceau est constitué d'une pluralité de tubes 33 de forme sinueuse, crénelée, à angles non droits définissant des nappes s'imbriquant les unes dans les autres et disposés sensiblement selon l'axe de l'échangeur. La distance entre nappes est généralement comprise entre 4 et 7 fois le diamètre du tube.

De manière générale, la partie supérieure de la cloison de séparation ne dépasse sensiblement pas le prolongement de la paroi inférieure du régénérateur sur laquelle est insérée l'échangeur (fig. 4).

Dans le cas où l'échangeur possède avantageusement un organe de liaison 10 (fig. 2) assurant la communication du catalyseur entre l'échangeur proprement dit et le régénérateur, la cloison atteint généralement le niveau supérieur de la partie cylindrique (fig. 2) de l'échangeur.

L'organe de liaison 10 d'axe de symétrie P est généralement orienté selon un angle A par rapport à l'axe de symétrie de l'échangeur compris entre 0 et 80°, de préférence entre 40 et 50° et son diamètre extérieur Q est habituellement compris entre 0,8 et 1,5 fois le diamètre extérieur D de l'échangeur et de préférence entre 0,9 et 1,2 fois. Le cas où l'angle A est égal a zéro est illustré par la figure 4. A l'intérieur de l'organe de liaison 10, des moyens d'aération 9 avantageusement disposés au voisinage de l'axe de symétrie P dirigent de l'air d'aération en direction du régénérateur à une vitesse de jet rapportée à la section des moyens d'aération comprise entre 50 et 150 m/s et avantageusement comprise entre 80 et 120 m/s.

Selon la figure 3 représentant un autre mode de réalisation du dispositif, celui-ci comprend un organe de liaison 10 entre l'unité de régénération 1 et l'échangeur de chaleur 6, ayant un axe de symétrie P orienté selon un angle A par rapport à l'axe de symétrie de l'échangeur compris entre 0 et 80°. Cet organe 10 comporte un cloison 35 de section circulaire, disposée sensiblement selon l'axe P de l'organe de liaison, qui définit deux chambres 36 et 37 sensiblement coaxiales dont l'une 36, annulaire, communique avec le compartiment 23 où descend le catalyseur et dont l'autre 37 communique avec le compartiment 24 central où remonte le catalyseur. En outre, la chambre 37 où sont répartis les tubes d'échange 33 comprend au moins un organe d'aération 8 du catalyseur disposé sensiblement au voisinage de l'axe P de l'organe de liaison.

Le dispositif selon l'invention comporte un moyen de contrôle 34 de débit du gaz de fluidisation relié au moyens d'injection 28, 31 de ce gaz et avantageusement au moyen d'injection 31 dans le compartiment central où s'effectue la remontée du catalyseur. Ce moyen de contrôle 34 est asservi à un moyen de mesure 35 de la température du catalyseur dans le premier régénérateur 1 ou éventuellement dans le second régénérateur 13 grâce à des lignes de liaison 36 et 37.

On ajuste le débit de catalyseur circulant dans l'échangeur thermique en agissant sur la vitesse de fluidisation dans le compartiment où s'effectue une circulation ascendante pour maintenir la température du premier ou du second régénérateur à un niveau satisfaisant et donc la température du catalyseur régénéré devant être recyclé à l'entrée de l'élévateur de la zone réactionnelle, à une température de consigne qui dépend de la charge à craquer.

Lorsque la température du régénérateur est supérieure à la température de consigne, le moyen de contrôle envoie un signal au moyen d'injection 31 d'air de fluidisation de façon à augmenter la vitesse de circulation dans le compartiment central de refroidissement. Au contraire, lorsque la température de régénération est inférieure à la température de consigne, le moyen de contrôle 34 émet un signal qui agit sur le moyen d'injection 31 d'air et qui permet de diminuer la vitesse de fluidisation dans le compartiment central, voire de stopper l'échange. Le tableau 1 ci-dessous illustre le niveau d'échange thermique en fonction de la vitesse de fluidisation dans le compartiment central de remontée du catalyseur.

| Vitesse de fluidisation (m/s) | % de l'échange maximal |
|---|---|
| 1 | 100 |
| 0,6 | 100 |
| 0,3 | 50 |
| 0,1 | 20 |
| 0 | 0 |

Tableau 1

Des essais ont montré qu'en opérant selon le procédé de l'invention dans les conditions suivantes, en présence d'un catalyseur zéolithique :

| | |
|---|---|
| vitesse de fluidisation dans la zone de régénération : | 0,6 m/s |
| vitesse de fluidisation dans la partie descendante de l'échangeur : | 0,15 m/s |
| vitesse de fluidisation dans la partie ascendante de l'échangeur | 1 m/s |

on obtenait un gain de 35% sur la valeur maximale de l'échange.

On a illustré et décrit le cas où le compartiment central était cylindrique. L'invention resterait la même si le compartiment central avait une section rectangulaire. L'invention resterait également la même avec une cloison plane définissant deux compartiments allongés adjacents.

**Revendications**

1. Procédé de régulation ou contrôle du niveau thermique dans un traitement en lit fluidisé ou mobile et en continu d'un solide pulvérulent, le procédé comprenant au moins une zone de traitement dans laquelle on introduit ledit solide et on effectue un traitement de ce solide dans une zone à lit fluidisé dense ou mobile, on soutire dudit lit fluidisé dense ou mobile une partie au moins du solide par un organe de liaison, on envoie cette partie de solide dans une zone de régulation ou contrôle du niveau thermique, avantageusement allongée et ayant un axe de symétrie, on procède a une régulation thermique par échange de chaleur indirect avec un fluide, on réintroduit la partie du solide ainsi régulé thermiquement dans ledit lit fluidisé dense ou mobile par le même organe de liaison, le procédé étant caractérisé en ce qu'on fait circuler au moyen d'un fluide inerte ou non en lit fluidisé dense ou mobile ladite partie du solide dans la zone de régulation comportant une cloison interne de séparation qui définit deux compartiments adjacents, allongés selon ledit axe et communiquant par leur partie inférieure, le solide cheminant de manière descendante à l'état fluidisé dans l'un des compartiments, et le solide cheminant de manière ascendante à l'état fluidisé dans l'autre compartiment.

2. Procédé selon la revendication 1 de régulation ou contrôle du niveau thermique dans un traitement en lit fluidisé ou mobile et en continu d'un solide pulvérulent, le procédé comprenant au moins une zone de traitement dans laquelle on introduit ledit solide et on effectue un traitement de ce solide dans une zone à lit fluidisé dense ou mobile, on soutire dudit lit fluidisé dense ou mobile une partie au moins du solide par ledit organe de liaison, on envoie cette partie de solide dans une zone de régulation ou contrôle du niveau thermique avantageusement allongée et ayant un axe de symétrie, on procède à une régulation thermique par échange de chaleur indirect avec un fluide, on réintroduit la partie du solide ainsi régulé thermiquement dans ledit lit fluidisé dense ou mobile par même organe de liaison, le procédé étant caractérisé en ce qu'on fait circuler au moyen d'un fluide inerte ou non en lit fluidisé dense ou mobile ladite partie du solide dans la zone de régulation comportant une cloison interne de séparation qui définit deux compartiments adjacents, allongés selon ledit axe et communiquant par leur partie inférieure, le solide s'écoulant de manière descendant à l'état fluidisé dans l'un des compartiments, la vitesse de fluidisation dans ce compartiment étant comprise entre 0,1 cm et 2 m/s et le solide remontant à l'état fluidisé dans l'autre compartiment, la vitesse de fluidisation dans l'autre compartiment étant comprise entre 0,1 et 6 m/s.

3. Procédé selon l'une des revendications 1 et 2 appliquée à une régénération en lit fluidisé et en continu d'un catalyseur usagé par combustion du coke déposé sur le catalyseur au cours d'une réaction de conversion d'hydrocarbures dans une zone réactionnelle, le procédé comprenant au moins une zone de régénération dans laquelle on introduit ledit catalyseur en provenance de ladite zone réactionnelle, on effectue une régénération du catalyseur dans une zone à lit fluidisé dense en présence d'un gaz contenant de l'oxygène dans des conditions de régénération, on soutire dudit lit fluidisé dense une partie au moins du catalyseur, on envoie cette partie de catalyseur dans une zone de refroidissement avantageusement allongée et ayant un axe de symétrie, on refroidit par échange de chaleur indirect avec un fluide de refroidissement ladite partie du catalyseur, on réintroduit cette partie du catalyseur ainsi refroidi dans ledit lit fluidisé dense de la zone de régénération, le procédé étant caractérisé en ce qu'on fait circuler en lit fluidisé dense ladite partie du catalyseur dans la zone de refroidissement comportant une cloison interne de séparation qui définit deux compartiments adjacents allongés selon ledit axe et communiquant par leur partie inférieure, le catalyseur s'écoulant de manière descendante à l'état fluidisé dans l'un des compartiments, la vitesse de fluidisation dans ce compartiment étant comprise entre 0,1 cm et 2 m/s et le catalyseur remontant à l'état fluidisé dans l'autre compartiment, la vitesse de fluidisation dans l'autre compartiment étant comprise entre 0,1 et 6 m/s.

4. Procédé selon l'une des revendications 1 à 3 dans lequel la vitesse de fluidisation dans le compartiment où descend le catalyseur est comprise entre 0, 1 cm et 1 m/s et la vitesse de fluidisation dans le compartiment où remonte le catalyseur est comprise entre 0,3 et 5 m/s.

5. Procédé selon l'une des revendications 1 à 4, dans lequel ladite cloison de séparation définit deux compartiments coaxiaux.

6. Procédé selon l'une des revendications 1 à 5, comprenant deux zones de régénération dudit catalyseur usagé, caractérisé en ce qu'on effectue une première régénération du catalyseur dans une première zone de régénération et en ce que soit on refroidit ledit catalyseur selon l'une des revendication 1 à 4 et on envoie le catalyseur refroidi au moins en partie régénéré de la première zone de régénération vers une seconde zone de régénération où on effectue une seconde régénération, soit on envoie le catalyseur au moins en partie régénéré dans une seconde zone de régénération, on effectue une seconde régénération et on refroidit ledit catalyseur selon l'une des revendications 1 à 4.

7. Dispositif pour un traitement en lit fluidisé (ou mobile) et en continu d'un solide puvérulent comprenant :
a) une unité de traitement (1) sensiblement verticale dont la partie inférieure comporte un lit (3) fluidisé dense ou mobile dudit solide,
b) un échangeur de chaleur (6) de forme allongée, de préférence cylindrique et disposé avantageusement de manière sensiblement verticale ayant un axe de symétrie et ayant à sa partie supérieure une entrée et une sortie de solide qui communiquent avec ledit lit dense,
c) des moyens d'échange de chaleur (25) ou de régulation ou contrôle de niveau thermique contenus dans ledit échangeur de chaleur, ledit dispositif étant caractérisé en ce que ledit échangeur de chaleur comprend en combinaison :
– une cloison interne de séparation (22) définissant deux compartiments adjacents allongés (23, 24) suivant ledit axe de symétrie, un premier compartiment ayant une extrémité supérieure reliée à un passage de solide et une extrémité inférieure pour un passage de solide, un second compartiment ayant une extrémité inférieure de passage du solide en provenance du premier compartiment et une extrémité supérieure reliée à un passage de solide,
– un espace de passage (30) adapté au passage du solide du premier compartiment au second compartiment.
– des premiers moyens d'injection (28) d'un gaz de fluidisation dans le premier compartiment (23), disposés au voisinage de l'extrémité inférieure du premier compartiment (23) et adaptés à faire circuler de manière descendante le solide à l'état fluidisé, et,
– des seconds moyens d'injection (31) d'un gaz de fluidisation dans le second compartiment, disposés au voisinage de l'extrémité inférieure du second compartiment (24) et adaptés à faire circuler de manière ascendante le solide à l'état fluidisé.

8. Dispositif selon la revendication 7 pour un traitement en lit fluidisé ou mobile et en continu d'un solide pulvérulent comprenant :
a) une unité de traitement (1) sensiblement verticale dont la partie inférieure comporte un lit (3) fluidisé dense ou mobile dudit solide,

b) un échangeur de chaleur (6) de forme allongée, de préférence cylindrique et disposé avantageusement de manière sensiblement verticale ayant un axe de symétrie et ayant à sa partie supérieure une entrée et une sortie de solide qui communiquent avec ledit lit dense de l'unité de traitement,

c) des moyens d'échange de chaleur (25) ou de régulation ou contrôle de niveau thermique contenus dans ledit échangeur de chaleur reliés à des conduites d'entrée (26) et de sortie (27) d'un fluide de régulation ledit dispositif étant caractérisé en ce que ledit échangeur de chaleur comprend en combinaison :

– une cloison interne de séparation (22) définissant deux compartiments adjacents allongés (23, 24) suivant ledit axe de symétrie, un premier compartiment ayant une extrémité supérieure reliée à ladite entrée de solide et une extrémité inférieure par laquelle sort le solide, un second compartiment ayant une extrémité inférieure par laquelle entre le solide en provenance du premier compartiment et une extrémité supérieure reliée à ladite sortie de solide,

– un espace de passage (30) adapté au passage du solide du premier compartiment au second compartiment.

– des premiers moyens d'injection (28) d'un gaz de fluidisation dans le premier compartiment (23), disposés au voisinage de l'extrémité inférieure du premier compartiment (23) et adaptés à faire s'écouler le solide de manière descendante à l'état fluidisé, et,

– des seconds moyens d'injection (31) d'un gaz de fluidisation dans le second compartiment, disposés au voisinage de l'extrémité inférieure du second compartiment (24) et adaptés à faire s'écouler le solide de manière ascendante à l'état fluidisé.

9. Dispositif selon l'une des revendications 7 et 8, dans lequel ladite cloison (22) entoure les dits moyens d'échange de chaleur (25).

10. Dispositif selon les revendications 7 à 9 dans lequel ladite cloison (22) comporte une pluralité de tubes de régulation thermique (32) (tubes membranes) (fig. 2).

11. Dispositif selon l'une des revendications 7 à 10 dans lequel la distance selon l'axe entre la partie inférieure de ladite cloison (22) et les premiers et seconds moyens d'injection (28, 31) est comprise entre 0 et 0,8 m et avantageusement comprise entre 0,4 et 0,6 m.

12. Dispositif selon l'une des revendications 7 à 11 caractérisé en ce qu'il comporte des moyens de contrôle (34) de débit du gaz de fluidisation reliés aux dits moyens d'injection (31) et asservis à un moyen de mesure (35) de la température dans ladite unité de traitement (1).

13. Dispositif selon l'une des revendications 7 a 12, et adapté à un traitement qui est une régénération de catalyseur, caractérisé en ce qu'il comprend un organe de liaison (10) entre ladite unité de traitement (ici régénération (1) et ledit échangeur de chaleur (6), ayant un axe de symétrie P orienté selon un angle A par rapport à l'axe de symétrie de l'échangeur compris entre 0 et 80°, ledit organe de liaison (10) comportant au moins un organe d'aération (8) disposé sensiblement au voisinage de l'axe P de l'organe de liaison et adapté à réaliser une vitesse de jet rapportée à la section de l'organe d'aération comprise entre 50 et 150 m/s.

14. Dispositif selon l'une des revendications 7 à 12, adapté à un traitement qui est régénération de catalyseur, caractérisé en ce qu'il comprend un organe de liaison (10) entre l'unité de régénération (1) et l'échangeur de chaleur (6) d'axe de symétrie P orienté selon un angle A par rapport à l'axe de symétrie de l'échangeur compris entre 0 et 80°, ledit organe 10 comportant une seconde cloison (35) disposée sensiblement selon l'axe P de l'organe de liaison, qui définit deux chambres (36, 37) donc l'une communique avec le premier compartiment (23) et dont l'autre 37 communique avec le second compartiment (24), le dispositif étant caractérisé en outre en ce que l'organe de liaison (10) comprend au moins un organe d'aération (8) disposé sensiblement au voisinage de l'axe P de l'organe de liaison, dans la chambre communiquant avec le compartiment où s'effectue la remontée du catalyseur et adapté à réaliser une vitesse de jet rapportée à la section de l'organe d'aération comprise entre 50 et 150 m/s.

15. Dispositif selon l'une des revendications 7 à 14, dans lequel les dits moyens d'échange (25) sont constitués d'une pluralité de tubes (33 - figure 4) de forme sinueuse définissant des nappes s'imbriquant les unes dans les autres et disposés sensiblement selon l'axe de symétrie de l'échangeur.

## Claims

1. Process for regulating or controlling the thermal level in a continuous moving bed or in a continuous fluidized bed treatment of a pulverulent solid, the process comprising at least one treatment zone, into which is introduced the said solid and said solid is treated in a moving bed or in a fluidized bed zone from which is removed at least part of the solid by means of a linking member, said solid part is passed into a zone for regulating or checking the thermal level and which is advantageously elongated and has an axis of symmetry, heat regulation taking place by indirect heat exchange with a fluid, the thus thermally regulated solid part is reintroduced into the moving or dense fluidized bed by the same linking member, said process being characterized in that by means of a moving or dense fluidized bed inert or non-inert fluid said solid part is made to flow in the regulating zone having an internal separating partition, which defines two adjacent compartments elongated in accordance with said axis and communicating by their lower part, the solid flowing downwards in the fluidized state in one of the compartments and flowing upwards in the fluidized state in the other.

2. Process according to claim 1 for regulating or controlling the thermal level in a continuous, moving bed or in a continuous fluidized bed treatment of a pulverulent solid, the process having at least one treatment zone into which is introduced said solid and said solid undergoes a treatment in a moving or dense fluidized bed zone from which at least part of the solid is removed by said linking member, said solid part is passed into a zone for regulating or checking the thermal level and which is advantageously elongated and has an axis of symmetry, a heat regulation takes place by indirect heat exchange with a fluid, the thus thermally regulated solid part is reintroduced into the moving or dense fluidized bed by the same linking member, said process being characterized in that by means of a moving or dense fluidized bed inert or non-inert fluid said solid part is made to flow in the regulating zone having an internal separating partition, which defines two adjacent compartments, elongated in accordance with said axis and communicating by their lower part, the solid flowing downwards in the fluidized state in one of the compartments, the fluidization speed in said compartment being between 0.1 cm/s and 2 m/s and the solid rising in the fluidized state in the other compartment, the fluidization speed in said other compartment being between 0.1 and 6 m/s.

3. Process according to one of the claims 1 and 2 applied to a continuous, fluidized bed regeneration of a spent catalyst by combustion of the coke deposited on the catalyst during a hydrocarbon conversion reaction in a reaction zone, said process comprising at least one regenerating zone which is introduced the catalyst from said reaction zone, the catalyst is regenerated in a dense fluidized bed zone in the presence of a gas containing oxygen under regenerating conditions, from said dense fluidized bed is removed at least part of the catalyst, which is passed into an advantageously elongated cooling zone having an axis of symmetry, said catalyst part undergoes cooling by indirect heat exchange with a cooling fluid, the thus cooled catalyst part then being reintroduced into said dense fluidized bed of the regenerating zone, the process being characterized in that said catalyst part is made to flow in a dense fluidized bed into the cooling zone having an internal separating partition, which defines two adjacent compartments, elongated in accordance with said axis and communicating by their lower part, the catalyst flowing downwards in the fluidized state in one of the compartments, the fluidization speed in said compartment being between 0.1 cm/s and 2 m/s and the catalyst rising in the fluidized state in the other compartment, the fluidization speed in said other compartment being between 0.1 and 6 m/s.

4. Process according to one of the claims 1 to 3, wherein the fluidization speed in the compartment where the catalyst is falling is between 0.1 cm/s and 1 m/s and the fluidization speed in the compartment where the catalyst is rising is between 0.3 and 5 m/s.

5. Process according to one of the claims 1 to 4, wherein said separating partition defines two coaxial compartments.

6. Process according to one of the claims 1 to 5, comprising two spent catalyst regenerating zones, characterized in that a first regeneration of the catalyst takes place in a first regenerating zone and in that either the catalyst is cooled according to one of the claims 1 to 4 and the at least partly regenerated catalyst is supplied from the first regenerating zone to a second regenerating zone where a second regeneration takes place, or said at least partly regenerated catalyst is supplied to a second regenerating zone, where a second regeneration takes place and said catalyst is cooled in accordance with one of the claims 1 to 4.

7. Apparatus for a continuous fluidized (or moving) bed treatment of a pulverulent solid comprising

a) a substantially vertical treatment unit (1), whereof the lower part has a moving or dense fluidized bed (3) of said solid,

b) an elongated and preferably cylindrical heat exchanger (6) advantageously arranged in a substantially vertical manner and having an axis of symmetry and in its upper part an intake and an outlet for the solid communicating with said dense bend,

c) means (25) for the heat exchange or the regulation or control of the thermal level contained in said heat exchanger, said apparatus being characterized in that said heat exchange comprises in combination:

– an internal separating partition (22) defining two adjacent, elongated compartments (23, 24) along said axis of symmetry, a first compartment having an upper end connected to a solid passage and a lower end for a solid passage and a second compartment having a lower end for the passage of the solid from the first compartment and an upper end connected to a solid passage,

– a passage space (30) adapted to the passage of the solid from the first compartment to the second,

– first means (28) for injecting a fluidizing gas into the first compartment (23) and located in the vicinity of the lower end of the first compartment (23) and for bringing about a downward flow of the solid in the fluidized state and

– second means (31) for injecting a fluidizing gas into the second compartment and located in the vicinity of the lower end of said second compartment (24) and serving to bring about a rising flow of the solid in the fluidized state.

8. Apparatus according to claim 7 for a continuous, moving or a continuous fluidized bed treatment of a pulverulent solid comprising:

a) a substantially vertical treatment unit (1), whose lower part has a moving or dense fluidized bed (3) of said solid,

b) an elongated and preferably cylindrical heat exchanger (6) advantageously positioned in a substantially vertical manner in accordance with an axis of symmetry and having in its upper part a solid intake and outlet communicating with said dense bed of the treatment unit,

c) heat exchange or thermal level regulating or controlling means (25) contained in said heat exchanger and connected to intake (26) and outlet (27) pipes for a regulating fluid, said apparatus being characterized in that the heat exchanger comprises in combination:

– an internal separating partition (22) defining two adjacent, elongated compartments (23, 24) in accordance with said axis of symmetry, a first compartment having an upper end connected to said solid intake and a lower end through which passes out the solid, a second compartment having a lower end by which enters the solid from the first compartment and an upper end connected to the solid outlet, a passage space (30) for the passage of the solid from the first compartment to the second,

– first means (28) for injecting a fluidizing gas into the first compartment (23) and located in the vicinity of the lower end of the first compartment (23) and which bring about a falling solid flow in the fluidized state and

– second means (31) for injecting a fluidizing gas into the second compartment and located in the vicinity of the lower end of said second compartment (24) and which bring about a rising flow of the solid in the fluidized state.

9. Apparatus according to one of the claims 7 and 8, wherein said partition (22) surrounds said heat exchange means (25).

10. Apparatus according to claims 7 to 9, wherein said partition (22) has a plurality of heat regulating tubes (32) (diaphragm tubes - fig. 2).

11. Apparatus according to one of the claims 7 to 10, wherein the distance along the axis between the lower part of said partition (22) and the first and second injecting means (28, 31) is between 0 and 0.8 m and advantageously between 0.4 and 0.6 m.

12. Apparatus according to one of the claims 7 to 11, characterized in that it has means (34) for controlling the flow rate of the fluidizing gas connected to said injection means (31) and dependent on a temperature measuring means (35) in said treatment unit (1).

13. Apparatus according to one of the claims 7 to 12 and adapted to a catalyst regeneration treatment, characterized in that it comprises a linking member (10) between said treatment (in this case regeneration) unit (1) and said heat exchanger (6) having an axis of symmetry P oriented in accordance with an angle A with respect to the axis of symmetry of the exchanger between 0 and 80°, said linking member (10) having an at least one aerating member (8) arranged substantially in the vicinity of the axis P of the linking member and able to produce a jet velocity related to the section of the aerating member between 50 and 150 m/s.

14. Apparatus according to one of the claims 7 to 12 appropriate for a catalyst regeneration treatment, characterized in that it comprises a linking member (10) between the regenerating unit (1) and the heat exchanger (6) of axis of symmetry P oriented in accordance with an angle A with respect to the axis of symmetry of the exchanger between 0 and 80°, said member (10) having a second partition (35) arranged substantially in accordance with the axis P of the linking member, which defines two chambers (36, 37), whereof one communicates with the first compartment (23) and whereof the other (37) communicates with the second compartment (24), the apparatus also being characterized in that the linking member (10) comprises at least one aerating member (8) disposed substantially in the vicinity of the axis P of the linking member in the chamber communicating with the compartment where the catalyst rise takes place and appropriate for bringing about a jet speed related to the section of the aerating member between 50 and 150 m/s.

15. Apparatus according to one of the claims 7 to 14, wherein the exchange means (25) are constituted by a plurality of tubes (33 - fig. 4) having a sinuous shape and defining imbricated layers and disposed substantially in accordance with the axis of symmetry of the exchanger.

**Patentansprüche**

1. Verfahren zur Regulierung oder Kontrolle des thermischen Niveaus bei einer kontinuierlichen Behandlung eines pulverförmigen Feststoffes in einem Wirbel- oder Fließbett, das umfallt mindestens eine Behandlungszone, in die man den Feststoff einführt und diesen Feststoff in einer dichten oder beweglichen Wirbelbett-Zone behandelt, mindestens einen Teil des Feststoffs mittels eines Verbindungsorgans aus dem dichten oder beweglichen Wirbelbett abzieht, diesen Teil des Feststoffes in eine Zone zur Regulierung oder Kontrolle des thermischen Niveaus, die zweckmäßig langgestreckt ist und eine Symmetrieachse hat, einführt, eine thermische Regulierung durchführt durch indirekten Wärmeaustausch mit einem Fluid, den auf diese Weise thermisch regulierten Teil des Feststoffes mit dem gleichen Verbindungsorgan in das genannte dichte oder bewegliche Wirbelbett wieder einführt, dadurch gekennzeichnet, daß man den genannten Teil des Feststoffes mittels eines inerten oder nicht-inerten Fluids in Form eines dichten oder beweglichen Wirbelbettes in der Regulierungszone zirkulieren läßt, die umfaßt eine innere Trennwand, die zwei benachbarte, sich entlang der genannten Achse erstreckende Abteile definiert, die durch ihren unteren Teil miteinander in Verbindung stehen, wobei der im fluidisierten Zustand nach unten fallende Feststoff in eines der Abteile wandert und der im fluidisierten Zustand nach oben steigende Feststoff in das andere Abteil wandert.

2. Verfahren nach Anspruch 1 zur Regulierung oder Kontrolle des thermischen Niveaus bei der kontinuierlichen Behandlung eines pulverförmigen Feststoffes in einem Wirbelbett oder Fließbett, das umfaßt mindestens eine Behandlungszone, in die man den Feststoff einführt und diesen Feststoff in einer dichten oder beweglichen Wirbelbettzone behandelt, mindestens einen Teil des Feststoffes mit dem genannten Verbindungsorgan aus dem dichten oder beweglichen Wirbelbett abzieht, diesen Teil des Feststoffes in eine Zone zur Regulierung oder Kontrolle des thermischen Niveaus einführt, die zweckmäßig langgestreckt ist und eine Symmetrieachse hat, eine thermische Regulierung durchführt durch indirekten Wärmeaustausch mit einem Fluid und den auf diese Weise thermisch regulierten Teil des Feststoffes mit dem gleichen Verbindungsorgan in das dichte oder bewegliche Wirbelbett wieder einführt, dadurch gekennzeichnet, daß man den genannten Teil des Feststoffes mittels eines inerten oder nicht-inerten Fluids in einem dichten oder beweglichen Wirbelbett in der Regulierungszone zirkulieren läßt, die eine innere Trennwand aufweist, die zwei benachbarte Abteile definiert, die sich entlang der Achse erstrecken und durch ihren unteren Teil miteinander in Verbindung stehen, wobei der im fluidisierten Zustand nach unten fallende Feststoff in eines der Abteile fließt, wobei die Fluidisierungsgeschwindigkeit in diesem Abteil zwischen 0,1 cm und 2 m/s liegt, und der im fluidisierten Zustand nach oben steigende Feststoff in das andere Abteil fließt, wobei die Fluidisierungsgeschwindigkeit in dem anderen Abteil zwischen 0,1 und 6 m/s liegt.

3. Verfahren nach einem der Ansprüche 1 und 2, angewendet auf die kontinuierliche Regenerierung eines gebrauchten Katalysators in einem Wirbelbett durch Verbrennung des Kokses, der sich im Verlaufe einer Kohlenwasserstoffumwandlungsreaktion in einer Reaktionszone auf dem Katalysator abgelagert hat, wobei das Verfahren umfaßt mindestens eine Regenerierungszone, in die man den aus der Reaktionszone stammenden Katalysator einführt, den Katalysator in einer dichten Wirbelbett-Zone in Gegenwart eines Sauerstoff enthaltenden Gases unter Regenerierungsbedingungen regeneriert, mindestens einen Teil des Katalysators aus dem dichten Wirbelbett abzieht, diesen Teil des Katalysators in eine Abkühlungszone einführt, die zweckmäßig langgestreckt ist und eine Symmetrieachse hat, diesen Teil des Katalysators durch indirekten Wärmeaustausch mit einem Abkühlungsfluid abkühlt und diesen so abgekühlten Teil des Katalysators in das dichte Wirbelbett der Regenerierungszone wieder einführt, dadurch gekennzeichnet, daß man diesen Teil des Katalysators in Form eines Wirbelbettes zirkulieren läßt in der Abkühlungszone, die eine innere Trennwand aufweist, die zwei benachbarte Abteile definiert, die sich entlang der Achse erstrecken und durch ihren unteren Abschnitt miteinander in Verbindung stehen, wobei der Katalysator, der im fluidisierten Zustand nach unten fällt, in eines der Abteile fließt, wobei die Fluidisierungsgeschwindigkeit in diesem Abteil zwischen 0,1 cm und 2 m/s liegt, und der Katalysator, der im fluidisierten Zustand nach oben steigt, in das andere Abteil fließt, wobei die Fluidisierungsgeschwindigkeit in dem anderen Abteil zwischen 0,1 und 6 m/s liegt.

4. Verfahren nach einem der Ansprüche 1 bis 3, bei dem die Fluidisierungsgeschwindigkeit in dem Abteil, in dem der Katalysator nach unten fällt, zwischen 0,1 cm und 1 m/s liegt und die Fluidisierungsgeschwindigkeit in dem Abteil, in dem der Katalysator nach oben steigt, zwischen 0,3 und 5 m/s liegt.

5. Verfahren nach einem der Ansprüche 1 bis 4, bei dem die genannte Trennwand zwei koaxiale Abteile definiert.

6. Verfahren nach einem der Ansprüche 1 bis 5, das zwei Zonen zur Regenerierung des gebrauchten Katalysators umfaßt, dadurch gekennzeichnet, daß man eine erste Regenerierung des Katalysators in einer ersten Regenerierungszone durchführt und daß man entweder den Katalysator nach einem der Ansprüche 1 bis 4 abkühlt und den abgekühlten, mindestens zum Teil in der ersten Regenerierungszone regenerierten Katalysator in eine zweite Regenerierungszone einführt in der man eine zweite Regenerierung durchführt, oder den mindestens zum Teil regenerierten Katalysator in eine zweite Regenerierungszone einführt, eine zweite Regenerierung durchführt und den Katalysator nach einem der Ansprüche 1 bis 4 abkühlt.

7. Vorrichtung zur kontinuierlichen Behandlung eines pulverförmigen Feststoffes in einem Wirbelbett oder Fließbett, die umfaßt

a) eine im wesentlichen vertikale Behandlungseinheit (1), deren unterer Abschnitt ein dichtes oder bewegliches Wirbelbett (3) des Feststoffes enthält,

b) einen Wärmeaustauscher (6) mit einer langgestreckten, vorzugsweise zylindrischen Form, der zweckmäßig im wesentlichen vertikal angeordnet ist, der eine Symmetrieachse hat und der in seinem unteren Abschnitt eine Eintrittsöffnung und eine Austrittsöffnung für den Feststoff hat, die mit dem dichten Bett in Verbindung stehen,

c) Einrichtungen (25) zum Wärmeaustausch oder zur Regulierung oder Kontrolle des thermischen Niveaus, die in dem Wärmeaustauscher enthalten sind, wobei die Vorrichtung dadurch gekennzeichnet ist, daß der Wärmeaustauscher in Kombination umfaßt:

– eine innere Trennwand (22), die zwei benachbarte Abteile (23, 24) definiert, die sich entlang der Symmetrieachse erstrecken, wobei ein erstes Abteil aufweist ein oberes Ende, das mit einem Feststoffdurchgang verbunden ist, und ein unteres Ende für einen Feststoffdurchgang, und ein zweites Abteil aufweist ein unteres Ende für den Durchgang des Feststoffes, der aus dem ersten Abteil stammt, und ein oberes Ende, das mit einem Feststoffdurchgang verbunden ist,

– einen Durchgangsraum (30), der geeignet ist für den Durchgang des Feststoffes aus dem ersten Abteil in das zweite Abteil,

– erste Einrichtungen (28) zur Injektion eines Fluidisierungsgases in das erste Abteil (23), die in Nachbarschaft zum unteren Ende des ersten Abteils (23) angeordnet sind und geeignet sind, den Feststoff im fluidisierten Zustand nach unten fallend zirkulieren zu lassen, und

– zweite Einrichtungen (31) zur Injektion eines Fluidisierungsgases in das zweite Abteil, das in Nachbarschaft zu dem unteren Ende des zweiten Abteils (24) angeordnet ist und geeignet ist, den Feststoff im fluidisierten Zustand in aufsteigender Weise zirkulieren zu lassen.

8. Vorrichtung nach Anspruch 7 zur kontinuierlichen Behandlung eines pulverförmigen Feststoffes in einem Wirbelbett oder Fließbett, die umfaßt:

a) eine im wesentlichen vertikale Behandlungseinheit (1), deren unterer Abschnitt ein dichtes oder bewegliches Wirbelbett (3) des Feststoffes enthält,

b) einen Wärmeaustauscher (6) mit einer langgestreckten, vorzugsweise zylindrischen Form, der zweckmäßig im wesentlichen vertikal angeordnet ist, der eine Symmetrieachse und in seinem unteren Abschnitt eine Eintrittsöffnung und eine Austrittsöffnung für den Feststoff aufweist, die mit dem dichten Bett der Behandlungseinheit in Verbindung stehen,

c) Einrichtungen (25) zum Wärmeaustausch oder zur Regulierung oder Kontrolle des thermischen Niveaus, die in dem Wärmeaustauscher enthalten sind, der mit Einführungsrohrleitungen (26) und Abzugsrohrleitungen (27) für ein Regulierungsfluid verbunden ist, wobei die Vorrichtung dadurch gekennzeichnet ist, daß der Wärmeaustauscher in Kombination umfaßt:

– eine innere Trennwand (22), die zwei benachbarte Abteile (23, 24) definiert, die sich entlang der Symmetrieachse erstrecken, wobei ein erstes Abteil aufweist ein oberes Ende, das mit der Einführungsleitung für den Feststoff verbunden ist, und ein unteres Ende, durch welches der Feststoff abgezogen wird, wobei das zweite Abteil aufweist ein unteres Ende, durch welches der aus dem ersten Abteil stammende Feststoff eingeführt wird, und ein oberes Ende, das mit der Abzugsleitung für den Feststoff in Verbindung steht,

– einen Durchgangsraum (30), der geeignet ist für den Durchgang des Feststoffes aus dem ersten Abteil in das zweite Abteil,

– erste Einrichtungen (28) zur Injektion eines Fluidisierungsgases in das erste Abteil (23), die in Nachbarschaft zu dem unteren Ende des ersten Abteils (23) angeordnet sind und in der Lage sind, den Feststoff in fluidisiertem Zustand absteigend fließen zu lassen, und

– zweite Einrichtungen (31) zur Injektion eines Fluidisierungsgases in das zweite Abteil, die in Nachbarschaft zu dem unteren Ende des zweiten Abteils (24) angeordnet sind und in der Lage sind, den Feststoff im fluidisierten Zustand in aufsteigender Weise fließen zu lassen.

9. Vorrichtung nach einem der Ansprüche 7 und 8, in der die Trennwand (22) die genannten Wärmeaustauschereinrichtungen (25) umgibt.

10. Vorrichtung nach einem der Ansprüche 7 bis 9, in der die genannte Trennwand (22) eine Vielzahl von thermischen Regulierungsrohrleitungen (32) (Rohrmembranen) aufweist (Fig. 2).

11. Vorrichtung nach einem der Ansprüche 7 bis 10, in der der Abstand entlang der Achse zwischen dem unteren Abschnitt der Trennwand (22) und den ersten und zweiten Injektionseinrichtungen (28, 31) zwischen 0 und 0,8 m, vorzugsweise zwischen 0,4 und 0,6 m, liegt.

12. Vorrichtung nach einem der Ansprüche 7 bis 11, dadurch gekennzeichnet, daß sie Einrichtungen (34) zur Kontrolle (Regelung) der Fluidisierungsgasdurchflußmenge enthält, die mit den Injektionseinrichtungen (31) verbunden sind und gesteuert bzw. geregelt werden mittels einer Einrichtung (35) zur Messung der Temperatur in der Behandlungseinheit (1).

13. Vorrichtung nach einem der Ansprüche 7 bis 12, die geeignet ist für eine Behandlung, die eine Katalysatorregenerierung ist, dadurch gekennzeichnet, daß sie umfaßt ein Verbindungsorgan (10) zwischen der Behandlungseinheit (hier Regenerierung) (1) und dem Wärmeaustauscher (6), der eine Symmetrieachse P aufweist, die unter einem Winkel A in bezug auf die Symmetrieachse des Wärmeaustauschers orientiert ist, der zwischen 0 und 80° liegt, wobei das Verbindungsorgan (10) mindestens ein Belüftungsorgan (8) enthält, das im wesentlichen in Nachbarschaft zu der Achse P des Verbindungsorgans angeordnet ist und geeignet ist, eine Geschwindigkeit des dem Querschnitt des Belüftungsorgans zugeführten Gasstrahls zwischen 50 und 150 m/s zu erzeugen.

14. Vorrichtung nach einem der Ansprüche 7 bis 12, die für eine Behandlung geeignet ist, bei der es sich um eine Katalysatorregenerierung handelt, dadurch gekennzeichnet, daß sie umfaßt ein Verbindungsorgan (10) zwischen der Regenerierungseinheit (1) und dem Wärmeaustauscher (6) mit einer Symmetrieachse P, die in einem Winkel A in Bezug auf die Symmetrieachse des Wärmeaustauschers orientiert ist, der zwischen 0 und 80° liegt, wobei das Organ (10) eine zweite Trennwand (35) enthält, die im wesentlichen entlang der Achse P des Verbindungsorgans angeordnet ist und die zwei Kammern (36, 37) definiert, von denen die eine (36) mit dem ersten Abteil (24) und die andere (37) mit dem zweiten Abteil (24) in Verbindung steht, wobei die Vorrichtung außerdem dadurch gekennzeichnet ist, daß das Verbindungsorgan (10) mindestens ein Belüftungsorgan (8) umfaßt, das im wesentlichen in Nachbarschaft zu der Achse P des Verbindungsorgans angeordnet ist, in der Kammer, die mit dem Abteil in Verbindung steht, in dem der Katalysator nach oben steigt und die geeignet ist, eine Geschwindigkeit des dem Querschnitt des Belüftungsorgans zugeführten Gasstrahls zwischen 50 und 150 m/s zu erzeugen.

15. Vorrichtung nach einem der Ansprüche 7 bis 14, in der die genannten Austauscheinrichtungen (25) aus einer Vielzahl von sinusförmigen Rohrleitungen (33 - fig. 4) bestehen, die Decken (Schalen) definieren, die ziegelartig übereinanderliegen und im wesentlichen entlang der Symmetrieachse des Austauschers angeordnet sind.

FIG.1

FIG.2

FIG.3

FIG.4